# EUROPEAN PATENT APPLICATION

(11) **EP 4 848 168 A1**
(43) Date of publication of application: **02.12.2026**
(21) Application number: 26179465.5
(22) Date of filing: 19.05.2026
(51) Int. Cl.: G06Q 10/0631, G05B 15/00, G07C 9/00

(54) **HIERARCHAL MANAGEMENT OF COMPLIANCE FORMS**

(30) Priority: 27.05.2025 US 202519218645
(71) Applicant: HONEYWELL INTERNATIONAL INC., Charlotte, NC 28202 (US)
(72) Inventor: PRAEKELT, Erik, Charlotte, 28202 (US); GANDHI, Prashant, Charlotte, 28202 (US); COELHO DE SOUZA ALMEIDA, Raoni, Charlotte, 28202 (US); CAMERON, Timothy, Charlotte, 28202 (US); STANTON, Kirk, Charlotte, 28202 (US); JONES, Michael, Charlotte, 28202 (US)
(74) Representative: Haseltine Lake Kempner LLP

(57) **Abstract**

Various embodiments described herein relate to a method and system for provisioning hierarchal management of compliance forms in the visitor management system of a facility. The system comprises a processor and a memory. The processor receives first visitor data associated with a first site of the facility. The first visitor data comprises at least visitor types of the first site. Then the processor retrieves second site of the plurality of sites and second visitor data associated with the second site. The processor receives a request to link the first visitor data and the second visitor data and accordingly retrieves the second visitor data. Then the processor correlates the first visitor data with the second visitor data by automatically modifying the visitor types associated with the first visitor data to map with the visitor types of the second site. The processor establishes security protocols for each of the plurality of visitors associated with the first site.

## Description

### TECHNICAL FIELD OF INVENTION

Various embodiments of the present disclosure relate generally to compliance forms management and more particularly to system and method for provisioning hierarchal management of compliance forms in a visitor management system of a facility.

### BACKGROUND

In large organizations, such as corporations or manufacturing facilities, security is crucial. To ensure the safety and security of their premises, many of these organizations employ visitor management systems to handle the check-in and check-out processes for guests and contractors. These systems are designed to track and manage the flow of visitors, ensuring that only authorized individuals gain access to the site. As part of this process, visitors and contractors are often required to complete various forms before entering the site. These forms are crucial for maintaining security, compliance with regulations, and operational efficiency. They typically collect information such as personal details, purpose of visit, and any necessary health and safety declarations. While the forms used across different sites within the same organization are generally similar, there may be minor variations to address specific local requirements or conditions.

Managing these forms can be a complex task, especially when changes are needed. Updates may be required due to regulatory changes, modifications in company policies, or enhancements to security protocols and the like. Implementing these updates across tens or hundreds of sites is a significant undertaking. Each site must receive the updated forms, and the changes must be implemented accurately and consistently to ensure compliance and security. Currently, this process is highly manual, with individuals responsible for executing the changes across many forms. This manual approach is extremely time-consuming and labor-intensive, often leading to delays and inconsistencies. The challenge lies in finding a solution that can efficiently manage and update forms across multiple sites while accommodating the specific needs and variations of each location. A more scalable and automated approach is needed to reduce the time and resources required for this critical task. Therefore, there is a need for system and method for provisioning hierarchal management of compliance forms.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY

According to certain aspects of the disclosure, systems and methods for provisioning hierarchal management of compliance forms in a facility are described. Specifically, systems and methods are proposed to provision hierarchal management of compliance forms in a visitor management system of the facility.

According to one aspect, embodiments of the present invention feature the system for hierarchal management of compliance forms in the visitor management system of the facility. Specifically, the system for provisioning hierarchal management of compliance forms is described. The provisioning of hierarchal management of compliance forms is performed by creating the compliance forms at a parent site (i.e. second site) and automatically linking compliance forms at a child site (i.e. first site) based on visitor data such as at least visitor types of the child and parent sites. Any updates made to the compliance forms of the parent site can instantly propagate to the compliance forms at the child site. The system for provisioning hierarchal management of compliance forms comprises at least one non-transitory computer-readable storage medium having computer-coded instructions stored thereon. The computer-coded instructions are executed by one or more processors.

According to one aspect of an embodiment, the processor is initially configured to receive first visitor data associated with a first site of a plurality of sites of a facility, wherein the first visitor data comprises at least visitor types of the first site that is associated with a plurality of visitors of the facility. The processor is configured to retrieve a second site of the plurality of sites. Further, the processor is configured to retrieve second visitor data associated with the second site of the plurality of sites of the facility. The processor is configured to receive a request to link the first visitor data associated with the first site and the second visitor data associated with the second site. The processor is configured to retrieve the second visitor data associated with the second site of the plurality of sites. Then the processor is configured to correlate the first visitor data with the second visitor data based on at least visitor types of the second site. The first visitor data is correlated with the second visitor data by automatically modifying the visitor types of the first site to map with the visitor types of the second site based on at least the visitor types of the second site. Then the processor is configured to store the correlated first visitor data associated with the first site in a cloud-based database to update the visitor types of the first site. Further the processor is configured to establish one or more security protocols for each of the plurality of visitors associated with the first site based on the correlated first visitor data.

In some embodiments, the visitor types of the first site comprise one or more types of visitors who are checking-in/out at the facility during predetermined intervals for specific purposes, wherein the visitor types of the first site are child site visitor types, and the visitor types of the second site are parent site visitor types.

In some embodiments, the visitor data further comprises, one or more of parameters that comprises duration, purpose of visit, photo identity, business unit of the facility.

In some embodiments, the one or more security protocols for each of the plurality of visitors associated with the first site comprises at least configuration of specific rules and guidelines to ensure safety of each of the plurality of visitors and regulatory compliance with security-policies of the facility.

In some embodiments, the one or more processor is configured to correlate the first visitor data associated with the first site with the second visitor data associated with the second site based on at least the visitor types and business unit of the second site.

In some embodiments, the one or more processor is configured to receive the request to link the first visitor data associated with the first site and the second visitor data associated with the second site via a user interface from an authorized user of the second site.

In some embodiments, the one or more processor is further configured to validate the correlated first visitor data associated with the first site periodically.

In some embodiments, the one or more processor is configured to execute the one or more security protocols for each of the plurality of visitors associated with the first site based on the correlated first visitor data.

According to another aspect, example embodiments of the present disclosure include the method for hierarchal management of compliance forms in the visitor management system of the facility. Specifically, the method for provisioning hierarchal management of compliance forms is described. The provisioning of hierarchal management of compliance forms is performed by creating the compliance forms at a parent site (i.e. second site) and automatically linking compliance forms at a child site (i.e. first site) based on visitor data such as at least visitor types of the child and parent sites. Any updates made to the compliance forms of the parent site can instantly propagate to the compliance forms at the child site. The method is performed by a processor. Initially the processor receives first visitor data associated with a first site of a plurality of sites of a facility. The first visitor data comprises at least visitor types of the first site that is associated with a plurality of visitors of the facility. The processor retrieves second site of the plurality of sites and second visitor data associated with a second site of the plurality of sites of the facility. The processor receives a request to link the first visitor data associated with the first site and the second visitor data associated with the second site. The processor retrieves the second visitor data associated with the second site of the plurality of sites. Then the processor correlates the first visitor data with the second visitor data based on at least visitor types of the second site. The first visitor data is correlated with the second visitor data by automatically modifying the visitor types of the first site to map with the visitor types of the second site based on at least the visitor types of the second site. Then the processor stores the correlated first visitor data associated with the first site in a cloud-based database to update the visitor types of the first site. Further the processor establishes one or more security protocols for each of the plurality of visitors associated with the first site based on the correlated first visitor data.

In some embodiments, the visitor types of the first site comprise one or more types of visitors who are checking-in/out at the facility during predetermined intervals for specific purposes, wherein the visitor types of the first site are child site visitor types, and the visitor types of the second site are parent site visitor types.

In some embodiments, the visitor data further comprises, one or more of parameters that comprises duration, purpose of visit, photo identity, business unit of the facility.

In some embodiments, the one or more security protocols for each of the plurality of visitors associated with the first site comprises at least configuration of specific rules and guidelines to ensure safety of each of the plurality of visitors and regulatory compliance with security-policies of the facility.

In some embodiments, the method further comprises correlating the first visitor data associated with the first site with the second visitor data associated with the second site based on at least the visitor types and business unit of the second site.

In some embodiments, the method further comprises receiving the request to link the first visitor data associated with the first site and the second visitor data associated with the second site via a user interface from an authorized user of the second site.

In some embodiments, the method further comprises validating the correlated first visitor data associated with the first site periodically.

In some embodiments, the method further comprises executing the one or more security protocols for each of the plurality of visitors associated with the first site based on the correlated first visitor data.

According to another aspect, embodiments of the present invention feature a computer program product for provisioning hierarchal management of compliance forms comprising at least one non-transitory computer-readable storage medium having computer-readable program code portions stored therein. The computer-coded instructions are executed by one or more processors. Initially, the processor is configured to receive first visitor data associated with a first site of a plurality of sites of a facility, wherein the first visitor data comprises at least visitor types of the first site that is associated with a plurality of visitors of the facility. The processor is configured to retrieve second site of the plurality of sites and second visitor data associated with a second site of the plurality of sites of the facility. The processor is configured to receive a request to link the first visitor data associated with the first site and the second visitor data associated with the second site. The processor is configured to retrieve the second visitor data associated with the second site of the plurality of sites. Then the processor is configured to correlate the first visitor data with the second visitor data based on at least visitor types of the second site. The first visitor data is correlated with the second visitor data by automatically modifying the visitor types of the first site to map with the visitor types of the second site based on at least the visitor types of the second site. Then the processor is configured to store the correlated first visitor data associated with the first site in a cloud-based database to update the visitor types of the first site. Further the processor is configured to establish one or more security protocols for each of the plurality of visitors associated with the first site based on the correlated first visitor data.

The above summary is provided merely for the purpose of summarizing some example embodiments to provide a basic understanding of some aspects of the present disclosure. Accordingly, it will be appreciated that the above-described embodiments are merely examples and should not be construed to narrow the scope of the present disclosure in any way. It will be appreciated that the scope of the present disclosure encompasses many potential embodiments in addition to those here summarized, some of which will be further described below. Other features, aspects, and advantages of the subject will become apparent from the description, the drawings, and the claims.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 illustrates a schematic block diagram of an exemplary visitor management system in a network of a facility in accordance with one or more example embodiments described herein.
FIG. 2 illustrates a schematic block diagram showing an exemplary networked computing system environment of a visitor management system in accordance with one or more example embodiments described herein.
FIG. 3 illustrates a schematic diagram showing an exemplary dashboard for provisioning hierarchal management of compliance forms in accordance with one or more example embodiments described herein.
FIG. 4 illustrates a schematic block diagram showing an exemplary sites table associated with a parent site in accordance with one or more example embodiments described herein.
FIG. 5A illustrates a schematic block diagram showing an exemplary parent visitor types table associated with the parent site in accordance with one or more example embodiments described herein.
FIG. 5B illustrates a schematic block diagram showing an exemplary child visitor types table associated with a child site before linking (i.e. correlating) with the parent site in accordance with one or more example embodiments described herein.
FIG. 5C illustrates a schematic block diagram showing an exemplary child visitor types table associated with the child site after linking with the parent site in accordance with one or more example embodiments described herein.
FIG. 6 illustrates an exemplary method for associating the child sites with the parent site in accordance with one or more example embodiments described herein.
FIG. 7 illustrates an exemplary method for associating child visitor types of the child sites with parent site visitor types of the parent site in accordance with one or more example embodiments described herein; and
FIG. 8 illustrates an exemplary method for provisioning hierarchal management of compliance forms in accordance with one or more example embodiments described herein.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "visitor data" comprises one or more parameters, including visitor types, duration, purpose of visit, photo identity, and business unit of the facility.

The term "visitor types" refers to one or more types of visitors who are checking-in/out at the facility during predetermined intervals for specific purposes, wherein the visitor types of the first site is a child visitor type, and the second site is a parent visitor type.

Various embodiments of the present disclosure relate generally to a system and method for provisioning hierarchal management of compliance forms. In large organizations, managing compliance forms across multiple sites can be a complex and challenging task. These forms are essential for ensuring that the organization adheres to regulatory requirements, maintains security protocols, and operates efficiently. However, the system and method for provisioning hierarchal management of compliance forms reduces complexity in the process of updating and managing these forms, especially when changes need to be implemented across numerous locations. The system for provisioning hierarchal management of compliance forms by creating the compliance forms at a parent site (i.e. second site) and automatically linking compliance forms at a child site (i.e. first site) based on visitor data such as at least visitor types of the child and parent sites. Any updates made to the compliance forms of the parent site can instantly propagate to the compliance forms at the child site. The system for provisioning hierarchal management of compliance forms comprises at least one non-transitory computer-readable storage medium having computer-coded instructions stored thereon. The computer-coded instructions are executed by one or more processors. Initially, the processor is configured to receive first visitor data associated with a first site of a plurality of sites. The first visitor data comprises at least visitor types of the first site. The visitor types of the first site are associated with a plurality of visitors of a facility. For example, the visitor types comprise one or more types of visitors who are checking-in/out at the facility during predetermined intervals for specific purposes depending on the nature of the facility and its operations. The first visitor data further comprises duration of visit, purpose of visit, photo identity, business unit of the facility and the like. The first visitor data from the first site of the plurality of sites is referred as a child data and the first site is referred as a child site.

After receiving the first visitor data, the processor is configured to receive a request to link the first visitor data associated with the first site and second visitor data associated with a second site of the plurality of sites. The second visitor data includes but is not limited to visitor types, duration of visit, purpose of visit, photo identity, business unit of the facility and the like. The second site is referred as a parent site. The request may be provided by an operator or a system administrator through a user interface. The processor is configured to retrieve the second visitor data associated with the second site of the plurality of sites. For example, the visitor types of the first site include but are not limited to visitor, contractor, staff, delivery and the like. The visitor types of the second site include but are not limited to visitor, architect, cleaners, client, delivery, event organizer, service providers, and the like. Further, the processor is configured to generate the visitor type link ID and visitor type link site-ID associated with the first site (i.e. child site) to link with the parent ID automatically or using a predetermined sites table associated with the second site (i.e. parent site).

Once the second visitor data associated with the second site is retrieved, the processor is configured to correlate the first visitor data with the second visitor data based on at least visitor types of the second site. The correlation of the first visitor data with the second visitor data is performed by automatically modifying the visitor types of the first site to map with the visitor types of the second site based on at least the visitor types of the second site. For instance, before correlation of first site and the second site (i.e. before linking the child site and parent site), the visitor types associated with the first site (i.e. child visitor types or child site visitor types) and the the visitor types associated with the second site (i.e. parent visitor types) are configured with parameters such as "ID, NAME, SITE_ID". Here the "ID" referred to a unique identifier for each visitor type and this ensures that each type can be distinctly recognized and referenced within the system. Here, the "Name" referred to a human-readable name for the visitor type, making it easier for users to identify and understand the type of visitor. Here, the SITE_ID links the visitor type to a specific site, ensuring that the configurations are relevant to the correct location. For instance, prior to mapping, the configurations for the parent visitor types can be "Parent visitor types = [{id: 1, name: visitor, site_id: 1}, {id:2, name: contractor, site_id: 1}]". For instance, prior to mapping, the configurations for the child visitor types can be "child visitor types = [{id: 3, name: staff, site_id: 2}, {id:4, name: student, site_id: 2}]".

During the correlation of the first visitor data with the second visitor data, the child visitor types, and the parent visitor types are linked automatically using link ID and link site-ID. For example, a specific parent visitor type link ID will be provided for each of the child visitor types. For example, after correlation of first site and the second site (i.e. after linking the child site and parent site), the visitor types associated with the first site (i.e. child visitor types or child site visitor types) is modified to map with the visitor types associated with the second site (i.e. parent visitor types). That is, the visitor types associated with the first site (i.e. child visitor types) are configured with parameters such as "ID, NAME, SITE_ID, VISITOR_TYPE_LINK_ID, VISITOR_TYPE_LINK_SITE_ID". Here "VISITOR_TYPE_LINK_ID" and "VISITOR_TYPE_LINK_SITE_ID" establish a relationship between different visitor types, such as linking child visitor types to their parent visitor types.

The visitor type link ID and the visitor type link site-ID help in organizing and managing hierarchical structures within the visitor types. For instance, after automatic mapping, the configurations for the child visitor types can be "Child visitor types = [{id: 3, name: staff, site_id: 2, visitorTypeLinkId: 1, visitorTypeLinkSiteId: 1}, {id:4, name: student, site_id: 2, visitorTypeLinkId: 2, visitorTypeLinkSiteId: 1}]". For instance, after automatic mapping, the configurations for the parent visitor types can be "Parent visitor types = [{id: 1, name: visitor, site_id: 1}, {id:2, name: contractor, site_id: 1}]". That is, there is no change in the parent visitor types. Additionally, or alternatively, the processor is configured to correlate the first visitor data associated with the first site with the second visitor data associated with the second site based on visitor types and business unit/portfolio of the second site.

Once the correlation of the first visitor data with the second visitor data is performed, the processor is configured to store the correlated first visitor data associated with the first site in a cloud-based database. Then, the processor is configured to establish at least regulatory compliance and/or one or more security protocols for each of the plurality of visitors associated with the first site based on the correlated first visitor data. The one or more security protocols for each of the plurality of visitors associated with the first site comprises configuration of specific rules and guidelines to ensure safety of each of the plurality of visitors and compliance with security policies of the facility. The establishment of security protocols includes defining access levels, monitoring visitor activities, and ensuring that all security measures are adhered to during their visit. Additionally, it involves configuring systems to track visitor entry and exit, manage permissions, and respond to any security incidents that may arise. Further, the processor executes the one or more security protocols for each of the plurality of visitors associated with the first site based on the correlated first visitor data.

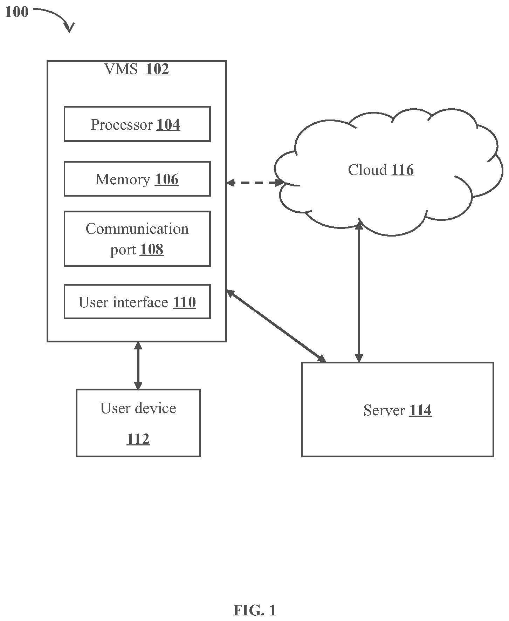

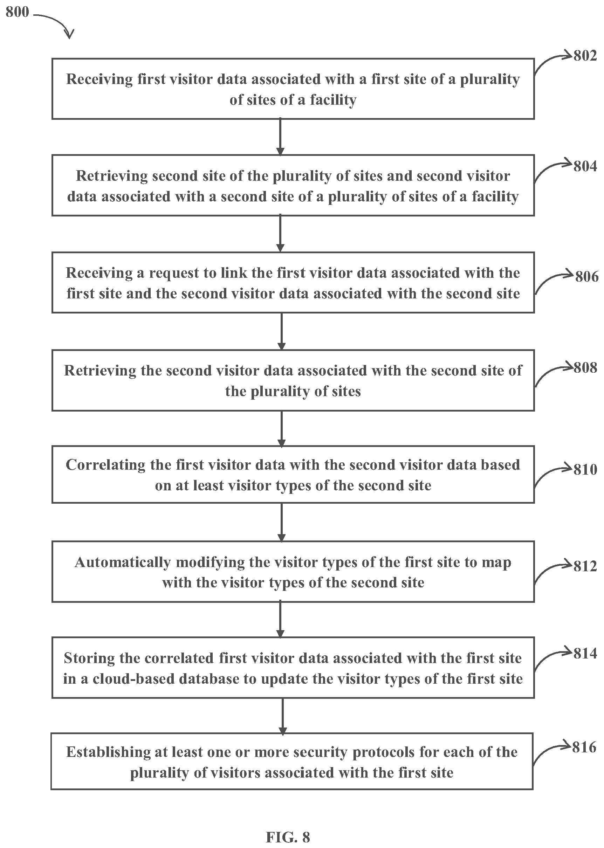

The system and method for provisioning hierarchal management of compliance forms is described further in relation with FIG. 1 to FIG. 8. Specifically, the systems and methods for provisioning hierarchal management of compliance forms in the visitor management system of the facility are described further in relation with FIG. 1 and FIG. 8.

FIG. 1 illustrates a schematic block diagram of an exemplary visitor management system in a network 100 of a facility in accordance with one or more example embodiments. Referring to FIG. 1, the visitor management system (i.e. VMS) is in communication with the cloud 116 via connected devices such as server 114. The VMS 102 may include one or more processors 104, a user interface 110, communication port 108, and a memory 106 such as a hard drive, flash drive, disk, etc. In some embodiments, the VMS 102 includes and/or interacts with an application programming interface for exchanging data with other systems, e.g., one or more of the other components of the environment 100. The visitor management system 102 may include and/or act as a repository or source for object data, user data, etc. The VMS 102 receives visitor data from the user of one or more user devices 112 via the user interface 110. The one or more user device(s) 112 may include input/output devices (e.g., a touchscreen display, keyboard, monitor, etc.) associated with one or more users (e.g., an administrator of an internal data system). The user device 112 may be configured to enable the user 112 to access and/or interact with other systems in the environment 100. For example, user device 112 may be a computer system such as, for example, a desktop computer, a server, a mobile device, a tablet, etc. In some embodiments, the user device 112 may include one or more electronic application(s), e.g., a program, plugin, browser extension, etc., installed on a memory of user device 112. In some embodiments, the electronic application(s) may be associated with one or more of the other components in the environment 100. For example, the electronic application(s) may include system control software, system monitoring software, software development tools, etc. The visitor data comprises but is not limited to at least visitor types of the first site that are associated with a plurality of visitors of the facility.

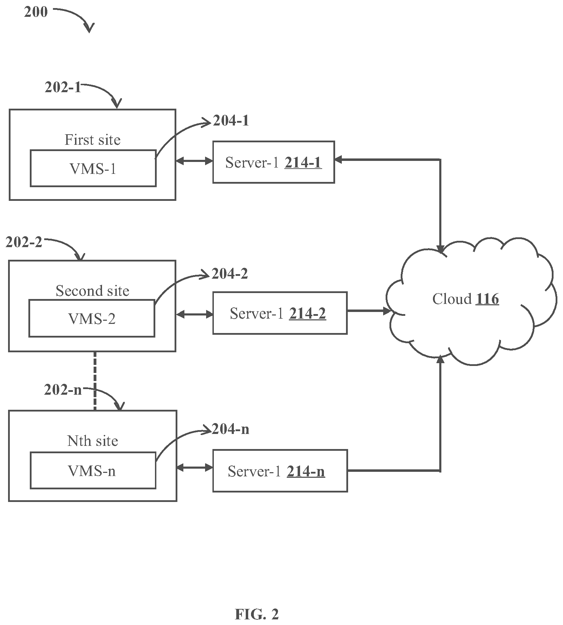

FIG. 2 illustrates an exemplary networked computing system environment 200 of a visitor management system as described in FIG.1, according to the present disclosure. As shown in FIG. 2, networked computing system environment 200 comprises at least a plurality of sites 202, the one or more user devices 112, one or more users, an electronic network and the like. The plurality of sites comprises but is not limited to a first site (202-1), a second site (202-2), an Nth site (202-n) and the like. Each of the plurality of sites 202 comprise but are not limited to data storage systems (such as visitor management system(s), VMS) connected with one or more connected devices, which may communicate with the cloud 116 via an electronic network or server 114. Additionally, or alternatively, the VMS may be maintained in the cloud and accessed by the connected devices of the plurality of sites. The data storage systems comprise but is not limited to a VMS-1 (204-1) associated with the first site (202-1), a VMS-2 (204-2) associated with the second site (202-2), a VMS-n (204-n) associated with the Nth site (202-n) and the like.

In some embodiments, components of environment 200 are associated with a common entity, e.g., an employee/contractor administration system or the like. In some embodiments, one or more of the components of environment 200 are associated with a different entity than another. For example, data storage system(s) or VMS 204 may be owned and operated by a third party, e.g. a Sine^{™} Visitor Management service. Systems and devices of environment 200 may communicate in any arrangement. As will be discussed herein, systems and/or devices of environment 100 may communicate in order to share and/or query data between one another. As will be discussed herein, systems and/or devices of environment 200 may have various permissions with respect to one another.

The one or more connected device(s) 114 may include a plurality of computational devices such as, for example, desktop computers, mobile devices, tablets, servers, etc. Computational devices may be arranged in a manner to facilitate horizontal scaling for executing various operations as discussed herein. That is, computational devices may be connected to the cloud 116 and/or to each other such that each of computational devices may contribute memory, processing power, etc. to perform an operation. As detailed further below, each of the plurality of VMSs (204-1, 204-2, 204-n) are in communication with components of the cloud (i.e. public cloud) 116 through a corresponding server (214-1, 214-2, 214-n) (for example, private cloud) or with the cloud (i.e. public cloud) using electronic network. For instance, the VMS-1 204-1 associated with the first site 202-1 is in communication with the server-1 114-1.

In various embodiments, the electronic network may be a wide area network ("WAN"), a local area network ("LAN"), personal area network ("PAN"), or the like. In some embodiments, electronic network includes the Internet, and information and data provided between various systems occurs online. "Online" may mean connecting to or accessing source data or information from a location remote from other devices or networks coupled to the Internet. Alternatively, "online" may refer to connecting or accessing an electronic network (wired or wireless) via a mobile communications network or device. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including but not limited to TCP/IP based networking protocols. The Internet is a worldwide system of computer networks-a network of networks in which a party at one computer or other device connected to the network can obtain information from any other computer and communicate with parties of other computers or devices. The most widely used part of the Internet is the World Wide Web (often-abbreviated "WWW" or called "the Web"). A "website page" generally encompasses a location, data store, or the like that is, for example, hosted and/or operated by a computer system so as to be accessible online, and that may include data configured to cause a program such as a web browser to perform operations such as send, receive, or process data, generate a visual display and/or an interactive interface, or the like.

Referring to FIG. 2, the system provisions hierarchal management of compliance forms by creating the compliance forms at a parent site (i.e. the second site) and automatically linking compliance forms at a child site (i.e. the first site) based on visitor data such as at least visitor types of the child and parent sites. Any updates made to the compliance forms of the parent site can instantly propagate to the compliance forms at the child site. The system for provisioning hierarchal management of compliance forms comprises at least one non-transitory computer-readable storage medium having computer-coded instructions stored thereon. The computer-coded instructions are executed by one or more processors 104.

Initially, the processor 104 is configured to receive first visitor data associated with a first site 202-1 of a plurality of sites. The first visitor data comprises at least visitor types of the first site 202-1. The visitor types of the first site 202-1 are associated with a plurality of visitors of the facility. For example, the visitor types comprise one or more types of visitors who are checking-in/out at the facility during predetermined intervals for specific purposes depending on the nature of the facility and its operations. The first visitor data further comprises duration of visit, purpose of visit, photo identity, business unit of the facility and the like. The first visitor data from the first site of the plurality of sites is referred as the child data and the first site is referred as the child site (i.e. the first site).

After receiving the first visitor data, the processor 104 is configured to receive a request to link the first visitor data associated with the first site 202-1 and second visitor data associated with a second site 202-2 of the plurality of sites. The second visitor data comprises but is not limited to visitor types, duration of visit, purpose of visit, photo identity, business unit of the facility and the like. The second site 202-2 is referred as a parent site. The request may be provided by an operator or a system administrator through the user interface 110. The processor 104 is configured to retrieve the second visitor data associated with the second site 202-2 of the plurality of sites (202-1, 202-2, 202-n). The processor 104 is configured to receive the request to link the first visitor data associated with the first site and the second visitor data associated with the second site via a user interface from an authorized user of the second site. For example, the visitor types of the first site 202-1 include but are not limited to visitor, contractor, staff, delivery and the like. The visitor types of the second site include but are not limited to visitor, architect, cleaners, client, delivery, event organizer, service providers, and the like. Further, the processor 104 is configured to automatically generate the visitor type link ID and visitor type link site-ID associated with the first site (i.e. child site) to link with the parent site ID. Additionally, or alternatively, the processor 104 is configured to retrieve the visitor type link ID and visitor type link site-ID associated with the first site (i.e. child site) to link with the parent ID using a predetermined sites table associated with the second site (i.e. parent site) 202-2.

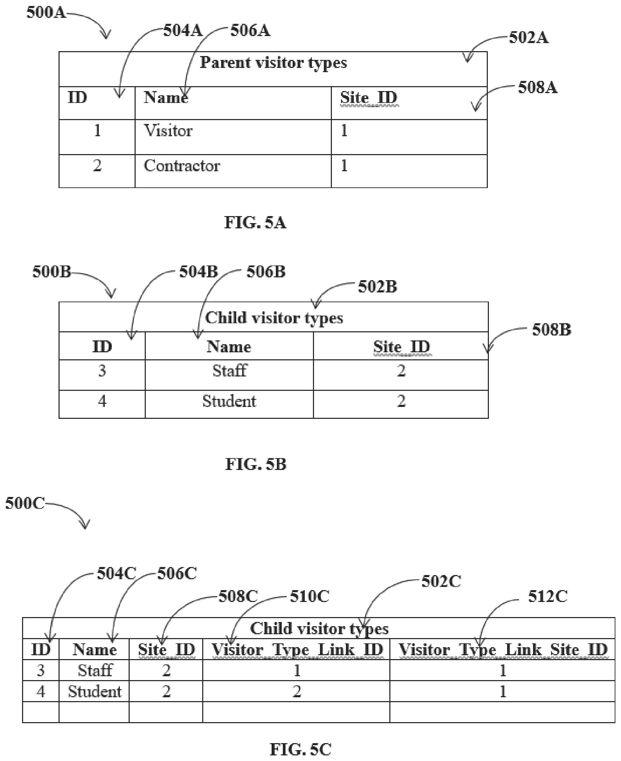

Once the second visitor data associated with the second site is retrieved, the processor 104 is configured to correlate the first visitor data with the second visitor data based on at least visitor types of the second site 202-2. The correlation of the first visitor data with the second visitor data is performed by automatically modifying the visitor types of the first site 202-1 to map with the visitor types of the second site 202-2 based on at least the visitor types of the second site 202-2. During the correlation of the first visitor data with the second visitor data, the child visitor types, and the parent visitor types are linked automatically using link ID and link site-ID of the parent site. For example, a specific parent visitor type link ID will be provided for each of the child visitor types. A detailed explanation of the correlation of the first visitor data with the second visitor data is described in connection with FIGs. 5A-5C.

Once the correlation of the first visitor data with the second visitor data is performed, the processor is configured to store the correlated first visitor data associated with the first site in a cloud-based database. Then, the processor is configured to establish at least regulatory compliance and/or one or more security protocols for each of the plurality of visitors associated with the first site based on the correlated first visitor data. The one or more security protocols for each of the plurality of visitors associated with the first site comprises configuration of specific rules and guidelines to ensure safety of each of the plurality of visitors and compliance with security policies of the facility. The establishment of security protocols includes defining access levels, monitoring visitor activities, and ensuring that all security measures are adhered to during their visit. Additionally, it involves configuring systems to track visitor entry and exit, manage permissions, and respond to any security incidents that may arise.

In some embodiments, the processor is configured to execute one or more security protocols for each of the plurality of visitors associated with the first site based on the correlated first visitor data. The execution process involves implementing specific security measures tailored to the individual visitor profiles. These protocols may include verifying the visitor's identity through photo identification, checking the duration and purpose of their visit, and ensuring they are authorized to access certain areas within the facility. Additionally, the security protocols may involve cross-referencing the visitor's business unit with the facility's security requirements to ensure compliance with organizational policies. By leveraging the correlated first visitor data, the system can dynamically adjust security measures to provide a secure and efficient visitor management process.

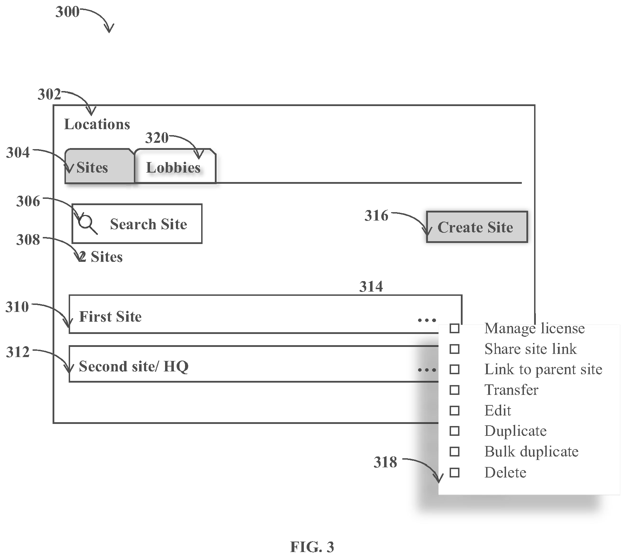

FIG. 3 illustrates a schematic diagram showing an exemplary dashboard 300 for hierarchal management of compliance forms using the user interface as shown in connection with the FIG. 1 and FIG.2 in accordance with one or more example embodiments. The dashboard provides an interactive display interface of the VMS described in connection with the FIG. 1 and FIG. 2. The dashboard 300 comprises at least locations 302 associated with the facility, or industrial plant or manufacturing unit or corporate office, commercial or business entity. The locations 302 comprise but is not limited to the plurality of sites 302 and a plurality of lobbies 320 of the facility. The processor 104 is configured to enable the user to search for the plurality of sites 302 associated with the facility using search box 306 and accordingly display results of the search 308. For instance, if two sites are associated with the facility then the dashboard 300 displays the first site 310 and the second site 312. Here, the first site 310 may be the child site and the second site 312 may be the parent site or headquarters of the facility. The processor 104 is configured to enable the user to perform actions related to the hierarchical management of compliance forms.

Further, only the user having the authority to perform the hierarchical management of compliance forms is allowed to perform one or more actions 314 such as linking of the specific sites using a drop-down menu 318. The one or more actions 314 may be available for each of the sites (for example first site and second site) associated with the facility. Additionally, only users with the authority (i.e. authorized users) to manage compliance forms hierarchically are permitted to perform actions such as linking specific sites to the parent site for implementing security protocols, manage license, share site link, transfer, edit, duplicate, bulk duplicate, delete and similar actions. That is, only system administrators are allowed to perform the actions associated with the hierarchical management of the compliance forms. Furthermore, the users are not permitted to alter visitor data at the parent site.

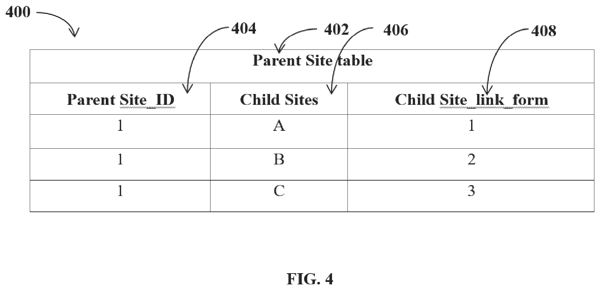

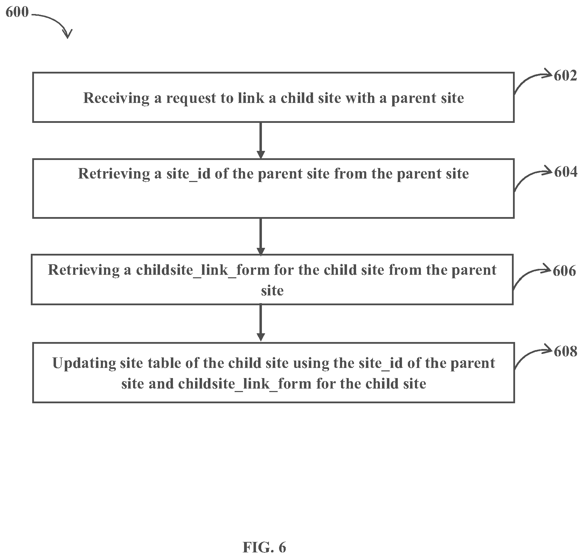

In some embodiments, the processor is configured to enable the user to create additional sites associated with the facility using a "create site" option 316. A detailed description of the addition of new child sites to the parent site within the facility is provided in connection with FIG. 4 and FIG. 6. Additionally, or alternatively, the processor is configured to correlate the first visitor data associated with the first site with the second visitor data associated with the second site based on visitor types and business unit/portfolio of the second site 202-2. The plurality of lobbies 320 in the location 302 refers to a feature that enables multi-tenant visitor management solutions, allowing sites to connect across teams into a unified lobby experience on an iPad kiosk, streamlining front-end check-in and enabling tenants to manage their own visitor and contractor needs.

FIG. 4 illustrates a schematic block diagram showing an exemplary sites table 400 associated with the parent site (i.e. second site in connection with FIGs.1-3) in accordance with one or more example embodiments described herein. Referring to FIG.4, the detailed description of the addition of new child sites to the parent site within the facility using site table is provided. The sites table 400 associated with the parent site is referred as a parent site table 402. The parent site table 402 comprises but is not limited to parameters such as parent site ID 404, child sites 406, child site link form 408 and related parameters. Considering the parameters, the parent site ID 404 refers to an identity of the parent site (i.e. the second site) within the facility and is used to establish a link with the child site (i.e. the first site). The child sites ID 406 identifies the child site, and the child site link form 408 specifies the link identity of the child site to associate it with the parent site. For example, if the parent site ID 404 is '1' and the child sites 406 are A, B, and C, then the processor 104 is configured to allocate the child site link form 408 for each child site 406 automatically. This allocation happens at the time of creation 316 of the child site within the facility. A detailed description of method for the addition of new child sites to the parent site within the facility is provided in connection with FIG. 6.

FIG. 5A and FIG. 5B illustrates a schematic block diagram showing an exemplary parent visitor type table 500A associated with the parent site and an exemplary child visitor types table 500B associated with a child site before linking with the parent site in accordance with one or more example embodiments described herein. During correlation, the processor analyzes the visitor types and business unit information from the second site and uses this data to map and align the corresponding visitor types and business unit information from the first site. This ensures that the visitor data is harmonized across both sites, facilitating seamless management and monitoring of visitors. For example, if a visitor is classified as a contractor at the second site and belongs to the maintenance business unit, the processor will ensure that the same classification and business unit information is applied to the visitor data at the first site. This correlation helps in maintaining a unified visitor profile, enabling efficient implementation of security protocols, access control, and compliance measures across the facility. By leveraging the visitor types and business unit information, the processor can dynamically adjust security measures and access permissions, ensuring that visitors are granted appropriate access based on their roles and affiliations within the organization

Referring to FIG.5A, a detailed explanation of the correlation of the first visitor types with the second visitor types using the parent visitor type table 500A is described. After retrieval of the second visitor data associated with the second site, the processor is configured to correlate the first visitor data with the second visitor data based on at least visitor types of the second site. The correlation of the first visitor data with the second visitor data is performed by automatically modifying the visitor types of the first site to map with the visitor types of the second site based on at least the visitor types of the second site. For instance, before correlation of first site and the second site (i.e. before linking the child site and parent site), the visitor types associated with the first site (i.e. child visitor types) and the the visitor types associated with the second site (i.e. parent visitor types or parent site visitor types) are configured with parameters such as "ID, NAME, SITE_ID". Here the "ID" referred to a unique identifier for each visitor type and this ensures that each type can be distinctly recognized and referenced within the system. Here, the "Name" referred to a human-readable name for the visitor type, making it easier for users to identify and understand the type of visitor. Here, the SITE_ID links the visitor type to a specific site, ensuring that the configurations are relevant to the correct location.

Referring to FIG.5A, prior to mapping, the configurations for the parent visitor types 502A comprises at least parent visitor type ID 504A, name S06A of the parent visitor types 502A, and parent site ID 508A. For example, the configurations for the parent visitor types can be "Parent visitor types = [{id: 1, name: visitor, site_id: 1}, {id:2, name: contractor, site_id: 1}]". That is, the parent visitor type ID 504A is '1', name 506A of the parent visitor types 502A is 'visitor', and the parent site ID 508A is '1'. Referring to FIG.5B, a detailed explanation of the correlation of the first visitor types with the second visitor types using the child visitor type table 500B is described. Prior to mapping, the configurations for the child visitor types 502B comprises at least child visitor type ID 504B, name 506B of the child visitor types 502B, and child site ID 508B. For example, prior to mapping, the configurations for the child visitor types can be "child visitor types = [{id: 3, name: staff, site_id: 2}, {id:4, name: student, site_id: 2}]". That is, the child visitor type ID 504B is '3', name 506B of the child visitor types 502B is 'staff', and the child site ID 508B is '2'.

FIG. 5C illustrates a schematic block diagram showing an exemplary child visitor types table 500C associated with the child site after linking with the parent site in accordance with one or more example embodiments described herein. During the correlation of the first visitor data with the second visitor data, the child visitor types, and the parent visitor types are linked automatically using link ID and link site-ID. For example, a specific parent visitor type link ID will be provided for each of the child visitor types. For example, after correlation of first site and the second site (i.e. after linking the child site and parent site), the visitor types associated with the first site (i.e. child visitor types) is modified to map with the visitor types associated with the second site (i.e. parent visitor types). That is, the visitor types associated with the first site (i.e. child visitor types) are configured with parameters such as "child visitor type ID 504C, child visitor type NAME 506C, child site ID 508C (child SITE_ID), VISITOR_TYPE_LINK_ID (i.e. parent visitor type link ID 510C), VISITOR_TYPE _LINK_SITE_ID" (i.e. parent visitor type link site ID 512C). Here "VISITOR_TYPE_LINK_ID" and "VISITOR_TYPE_LINK_SITE_ID" establish a relationship between different visitor types, such as linking child visitor types to their parent visitor types. The visitor type link ID and the visitor type link site-ID help in organizing and managing hierarchical structures within the visitor types.

Referring to FIG. 5C, after automatic mapping, the configurations for the child visitor types can be "Child visitor types = [{id: 3, name: staff, site_id: 2, visitorTypeLinkId: 1, visitorTypeLinkSiteId: 1}, {id:4, name: student, site_id: 2, visitorTypeLinkId: 2, visitorTypeLinkSiteId: 1}]". That is, the child visitor type ID 504C is '3', name 506C of the child visitor types 502C is 'staff', the child site ID 508C is '2', the visitor Type Link-Id is 2, and the visitor Type Link-Site-Id is 1. Here, the visitor Type Link-Id is '2' and same as the parent visitor type ID 504A. The visitor Type Link-Site-Id is 1 and same as the parent site ID 508A. Considering the parent visitor types table 500A, after automatic mapping, the configurations for the parent visitor types 502A remain same. For example, "Parent visitor types = [{id: 1, name: visitor, site_id: 1}, {id:2, name: contractor, site_id: 1}]". That is, there is no change in the parent visitor types 502A.

Referring now to FIGs. 6-8, example methods in accordance with various embodiments of the present disclosure are illustrated. In some examples, each block or step of the flowchart, and combinations of blocks and/or steps in the flowchart, may be implemented by various means such as hardware, circuitry and/or other devices associated with execution of software including one or more computer program instructions.

In some examples, one or more of the procedures described in the figures may be embodied by computer program instructions, which may be stored by a memory circuitry (such as a non-transitory memory) of an apparatus employing an embodiment of the present disclosure and executed by a processing circuitry (such as a processor 104) of the apparatus. These computer program instructions may direct the apparatus to function in a particular manner, such that the instructions stored in the memory circuitry may produce an article of manufacture, the execution of which may implement the function specified in the flowchart block(s). Further, the apparatus may comprise one or more other components, such as, for example, a communication circuitry and/or an input/output circuitry. Various components of the apparatus may be in electronic communication between and/or among each other to transmit data to and/or receive data from each other.

In some examples, embodiments may take the form of a computer program product on a non-transitory computer-readable storage medium storing computer-readable program instructions (e.g. computer software). Any suitable computer-readable storage medium may be utilized including non-transitory hard disks, CD-ROMs, flash memory, optical storage devices, and/or magnetic storage devices.

FIG. 6 illustrates an exemplary method 600 for associating the child sites with the parent site in accordance with one or more example embodiments described herein. The method 600 for associating the child sites with the parent site to provision hierarchical management of compliance forms in the facility is described in connection with FIGs. 1-4 and FIGs. 5A-5C. In some examples, the method 600 may be performed by a processor (for example, the processor of the system for provisioning hierarchical management of compliance forms in the facility is described in connection with FIGs. 1-5C). Referring to FIG. 6, the method 600 for provisioning hierarchical management of compliance forms within visitor management system (VMS) of the facility is described.

The method 600 begins at step 602, at which the processor comprised in the system (such as, but not limited to, the visitor management system (VMS) thereof as described above in connection with FIGs. 1-5C) receives a request to link a child site with a parent site. The processor receives the request to link the first visitor data associated with the first site and the second visitor data associated with the second site via a user interface from an authorized user of the second site. The authorized user of the second site refers to an individual who has been granted specific permissions and access rights to the second site within the facility. This authorization typically involves a verification process to ensure the user meets the necessary criteria for access. The authorized user may have the ability to perform various actions, such as accessing restricted areas, managing visitor data, and executing security protocols. Their access is often governed by predefined roles and responsibilities, which are aligned with the security and operational requirements of the second site. The authorization process may include identity verification, background checks, and adherence to compliance standards to ensure the security and integrity of the facility.

At step 604, the processor retrieves a site_id of the parent site (i.e. second site) at least from the parent site. That is, the processor retrieves the parent site id either from the cloud or from the parent site provided within the facility. The parent site ID (as referenced in FIG. 4) refers to an identity of the parent site (i.e. the second site) within the facility and is used to establish a link with the child site (i.e. the first site).

At step 606, the processor retrieves a childsite_link_form for the child site from the parent site. The child site ID (as referenced in FIG. 4) identifies the child site, and the child site link form specifies the link identity of the child site to associate it with the parent site.

At step 608, the processor updates site table of the child site using the site_id of the parent site and childsite_link_form for the child site. For example, if the parent site ID is '1' and the child sites are A, B, and C, then the processor 104 is configured to allocate the child site link form for each child site automatically. This allocation happens at the time of creation of the child site within the facility. The processor also validates the linked child site (i.e. first site) with the parent site (i.e. second site) periodically.

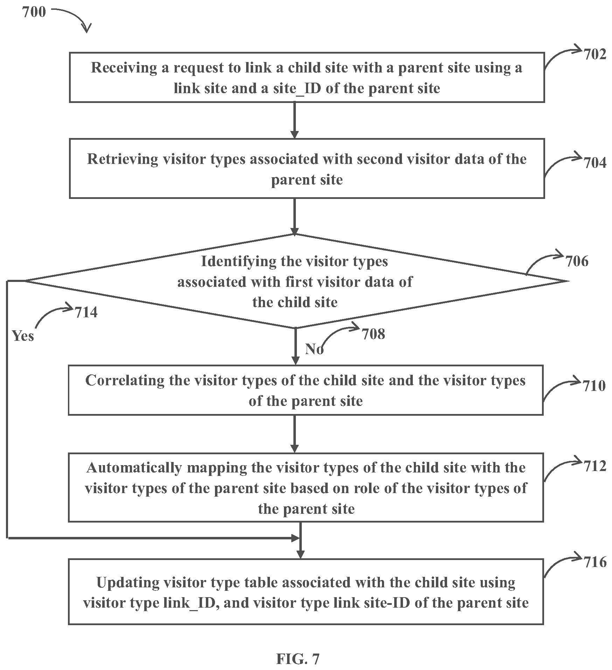

FIG. 7 illustrates an exemplary method 700 for associating the child site visitor types sites with the parent site visitor types in accordance with one or more example embodiments described herein. The method 700 for associating the child site visitor types with the parent site visitor sites to provision hierarchical management of compliance forms in the facility is described in connection with FIGs. 1-4 and FIGs. 5A-5C. In some examples, the method 700 may be performed by a processor (for example, the processor of the system for provisioning hierarchical management of compliance forms in the facility is described in connection with FIGs. 1-5C). Referring to FIG. 7, the method 700 for provisioning hierarchical management of compliance forms within visitor management system (VMS) of the facility by mapping child site visitor types and the parent site visitor types is described.

The method 700 begins at step 702, at which the processor comprised in the system (such as, but not limited to, the visitor management system (VMS) thereof as described above in connection with FIGs. 1-5C) receives a request to link a child site with a parent site using a link site and a site_ID of the parent site. The request may be provided by an operator or a system administrator through the user interface. For example, the visitor types of the first site include but are not limited to visitor, contractor, staff, delivery and the like. The visitor types of the second site include but are not limited to visitor, architect, cleaners, client, delivery, event organizer, service providers, and the like.

At step 704, the processor retrieves visitor types associated with second visitor data of the parent site using a predetermined sites table associated with the second site (i.e. parent site). Additionally, or alternatively, the processor 104 is configured to automatically generate the visitor type link ID and the visitor type link site-ID associated with the first site (i.e., child site) to link with the parent site ID.

At step 706, the processor determines whether a manual association of the visitor types associated with the first visitor data of the child site is requested or if there are one or more visitor types associated with the first visitor data of the child site. If either condition is satisfied or manual association is requested, the processor performs the manual steps described in step 714. Otherwise, at step 708, the processor performs automated steps described below in step 710-716.

At step 710, the processor correlates the visitor types of the child site and the visitor types of the parent site. Specifically, the processor establishes linking of the visitor types of the child site with the visitor types of the parent site. This process involves matching and integrating visitor information from both sites to ensure consistency and accuracy in visitor management.

At step 712, the processor automatically maps the visitor types of the child site to the visitor types of the parent site based on the roles of the visitor types of the parent site. Specifically, the processor automatically modifies the visitor types of the child site (i.e., first site) to align with the visitor types of the parent site (i.e., second site) based on the visitor types of the second site. During the correlation of the first visitor data with the second visitor data, the child visitor types and the parent visitor types are automatically linked using the link ID and link site-ID of the parent site.

At step 714, the processor performs either manual mapping of visitor types or validates existing one or more visitor types associated with the first visitor data of the child site.

At step 716, the processor updates visitor type table (as referenced in FIG.5C) associated with the child site using visitor type link_ID, and visitor type link site-ID of the parent site. In some embodiments, the visitor types can be correlated at the business or portfolio level for hierarchical management of compliance forms. This is achieved by updating the visitor type table with additional parameters, such as business unit, to control the establishment of security protocols at the business or portfolio level with the parent site.

FIG. 8 illustrates an exemplary method 800 for provisioning hierarchal management of compliance forms in accordance with one or more example embodiments described herein. The method 800 for associating the child site visitor types with the parent site visitor sites to provision hierarchical management of compliance forms in the facility is described in connection with FIGs. 1-7. In some examples, the method 800 may be performed by a processor (for example, the processor of the system for provisioning hierarchical management of compliance forms in the facility is described in connection with FIGs. 1-5C). Referring to FIG. 8, the method 800 for provisioning hierarchical management of compliance forms within visitor management system (VMS) of the facility is described.

The method 800 begins at step 802, at which the processor comprised in the system (such as, but not limited to, the visitor management system (VMS) thereof as described above in connection with FIGs. 1-5C) receives first visitor data associated with a first site of a plurality of sites of a facility. The first visitor data comprises at least visitor types of the first site. The visitor types of the first site are associated with a plurality of visitors of the facility. For example, the visitor types comprise one or more types of visitors who are checking-in/out at the facility during predetermined intervals for specific purposes depending on the nature of the facility and its operations. The first visitor data further comprises duration of visit, purpose of visit, photo identity, business unit of the facility and the like. The first visitor data from the first site of the plurality of sites is referred as a child data and the first site is referred as a child site.

At step 804, the processor retrieves the second site of the plurality of sites and second visitor data associated with a second site of the plurality of sites of the facility. That is, the processor retrieves the parent site id either from the cloud or from the parent site provided within the facility. The parent site ID (as referenced in FIG. 4) refers to an identity of the parent site (i.e. the second site) within the facility and is used to establish a link with the child site (i.e. the first site).

At step 806, the processor receives a request to link the first visitor data associated with the first site and the second visitor data associated with the second site. Here, the second visitor data includes but is not limited to visitor types, duration of visit, purpose of visit, photo identity, business unit of the facility and the like. The second site is referred as a parent site. The processor receives the request to link the first visitor data associated with the first site and the second visitor data associated with the second site via a user interface from an authorized user of the second site. The request may be provided by an operator or a system administrator through the user interface. For example, the visitor types of the first site include but are not limited to visitor, contractor, staff, delivery and the like. The visitor types of the second site include but are not limited to visitor, architect, cleaners, client, delivery, event organizer, service providers, and the like. The authorized user of the second site refers to an individual who has been granted specific permissions and access rights to the second site within the facility. This authorization typically involves a verification process to ensure the user meets the necessary criteria for access. The authorized user may have the ability to perform various actions, such as accessing restricted areas, managing visitor data, and executing security protocols. Their access is often governed by predefined roles and responsibilities, which are aligned with the security and operational requirements of the second site. The authorization process may include identity verification, background checks, and adherence to compliance standards to ensure the security and integrity of the facility.

At step 808, the processor retrieves the second visitor data associated with the second site of the plurality of sites. The second visitor data (i.e. parent visitor data) comprises but is not limited to visitor types, duration of visit, purpose of visit, photo identity, business unit of the facility and the like. The visitor types of the second site include but are not limited to visitor, architect, cleaners, client, delivery, event organizer, service providers, and the like. Further, the processor is configured to generate the visitor type link ID and visitor type link site-ID associated with the first site (i.e. child site) to link with the parent ID automatically or using a predetermined sites table associated with the second site (i.e. parent site).

At step 810, the processor correlates the first visitor data with the second visitor data based on at least visitor types of the second site. Specifically, the processor establishes linking of the visitor types of the child site with the visitor types of the parent site. This process involves matching and integrating visitor information from both sites to ensure consistency and accuracy in visitor management. During correlation, the processor analyzes the visitor types and business unit information from the second site and uses this data to map and align the corresponding visitor types and business unit information from the first site. This ensures that the visitor data is harmonized across both sites, facilitating seamless management and monitoring of visitors.

At step 812, the processor automatically modifies the visitor types of the first site to map with the visitor types of the second site. Specifically, the processor automatically modifies the visitor types of the child site (i.e., first site) to align with the visitor types of the parent site (i.e., second site) based on the visitor types of the second site. During the correlation of the first visitor data with the second visitor data, the child visitor types and the parent visitor types are automatically linked using the link ID and link site-ID of the parent site.

At step 814, the processor stores the correlated first visitor data associated with the first site in a cloud-based database to update the visitor types of the first site. For instance, the correlated first visitor data associated with the first site can be stored at least as first visitor data table or first visitor type table associated with the first site.

At step 816, the processor establishes the one or more security protocols for each of the plurality of visitors associated with the first site based on the correlated first visitor data. The one or more security protocols for each of the plurality of visitors associated with the first site comprises configuration of specific rules and guidelines to ensure safety of each of the plurality of visitors and compliance with security policies of the facility. The establishment of security protocols includes defining access levels, monitoring visitor activities, and ensuring that all security measures are adhered to during their visit. Additionally, it involves configuring systems to track visitor entry and exit, manage permissions, and respond to any security incidents that may arise.

Further, in some embodiments, the processor executes the one or more security protocols for each of the plurality of visitors associated with the first site based on the correlated first visitor data. The execution process involves implementing specific security measures tailored to the individual visitor profiles. These protocols may include verifying the visitor's identity through photo identification, checking the duration and purpose of their visit, and ensuring they are authorized to access certain areas within the facility. Additionally, the security protocols may involve cross-referencing the visitor's business unit with the facility's security requirements to ensure compliance with organizational policies. By leveraging the correlated first visitor data, the system can dynamically adjust security measures to provide a secure and efficient visitor management process.

Overall, the system for provisioning hierarchical management of compliance forms addresses the current challenges faced by large organizations, providing a scalable and efficient solution for managing and updating forms across multiple sites. The system for provisioning hierarchical management provides a structured approach to handle compliance forms. The hierarchical management system enables different levels of control and oversight, ensuring that updates and changes can be made efficiently and accurately. For example, a central authority could manage the core elements of the forms, while local site managers could customize specific sections to meet local requirements. This hierarchical approach can streamline the process, reducing the time and resources needed to update forms across multiple sites. Further, system for provisioning hierarchical management can also incorporated with automation and digital tools, AI/ML techniques and similar techniques to further enhance efficiency of the system. For example, visitor identification and verification performed using digital badges, ID scanning and the like. Automated workflows could ensure that updates are propagated across all sites simultaneously, minimizing manual intervention and reducing the risk of errors. Digital tools could provide real-time tracking and reporting, allowing for better oversight and compliance monitoring. For example, the digital tools provided for real-time tracking of visitor movements within the premises, enhancing security.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

The hardware used to implement the various illustrative logics, logical blocks, modules, and circuits described in connection with the aspects disclosed herein can include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor can be a microprocessor, but, in the alternative, the processor can be any processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods can be performed by circuitry that is specific to a given function.

Although example processing systems have been described in the figures herein, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources. A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communications network.

In one or more example embodiments, the functions described herein can be implemented by special-purpose hardware or a combination of hardware programmed by firmware or other software. In implementations relying on firmware or other software, the functions can be performed as a result of execution of one or more instructions stored on one or more non-transitory computer-readable media and/or one or more non-transitory processor-readable media. These instructions can be embodied by one or more processor-executable software modules that reside on the one or more non-transitory computer-readable or processor-readable storage media. Non-transitory computer-readable or processor-readable storage media can in this regard comprise any storage media that can be accessed by a computer or a processor. By way of example but not limitation, such non-transitory computer-readable or processor-readable media can include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray Disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program product.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communications network. Examples of communications networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communications network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A system comprising:
one or more processors; and
one or more memory including instructions executable by the one or more processors,
wherein the one or more processors is configured to:
receive first visitor data associated with a first site of a plurality of sites of a facility, wherein the first visitor data comprises at least visitor types of the first site that is associated with a plurality of visitors of the facility;
retrieve second site of the plurality of sites and second visitor data associated with a second site of the plurality of sites of the facility;
receive a request to link the first visitor data associated with the first site and the second visitor data associated with the second site;
retrieve the second visitor data associated with the second site of the plurality of sites;
correlate the first visitor data with the second visitor data based on at least visitor types of the second site, wherein the first visitor data is correlated with the second visitor data by:
automatically modifying the visitor types of the first site to map with the visitor types of the second site based on at least the visitor types of the second site;
store the correlated first visitor data associated with the first site in a cloud-based database to update the visitor types of the first site; and
establish one or more security protocols for each of the plurality of visitors associated with the first site based on the correlated first visitor data.

2. The system of claim 1, wherein the visitor types of the first site comprise one or more types of visitors who are checking-in/out at the facility during predetermined intervals for specific purposes, wherein the visitor types of the first site are child site visitor types, and the visitor types of the second site are parent site visitor types.

3. The system of claim 1, wherein the one or more processors are configured to correlate the first visitor data associated with the first site with the second visitor data associated with the second site based on at least the visitor types and business unit of the second site.

4. The system of claim 1, wherein the one or more processors are configured to receive the request to link the first visitor data associated with the first site and the second visitor data associated with the second site via a user interface from an authorized user of the second site.

5. The system of claim 1, wherein the one or more processors are further configured to validate the correlated first visitor data associated with the first site periodically.

6. The system of claim 1, wherein the one or more processors are further configured to execute the one or more security protocols for each of the plurality of visitors associated with the first site based on the correlated first visitor data.

7. A method comprising:
receiving, by one or more processors, first visitor data associated with a first site of a plurality of sites of a facility, wherein the first visitor data comprises at least visitor types of the first site that is associated with a plurality of visitors of the facility;
retrieving, by the one or more processors, second site of the plurality of sites and second visitor data associated with a second site of the plurality of sites of the facility;
receiving, by the one or more processors, a request to link the first visitor data associated with the first site and the second visitor data associated with the second site;
retrieving, by the one or more processors, the second visitor data associated with the second site of the plurality of sites;
correlating, by the one or more processors, the first visitor data with the second visitor data based on at least visitor types of the second site, wherein the first visitor data is correlated with the second visitor data by:
automatically modifying, by the one or more processors, the visitor types of the first site to map with the visitor types of the second site based on at least the visitor types of the second site;
storing, by the one or more processors, the correlated first visitor data associated with the first site in a cloud-based database to update the visitor types of the first site; and
establishing, by the one or more processors, one or more security protocols for each of the plurality of visitors associated with the first site based on the correlated first visitor data.

8. The method of claim 7, wherein the visitor types of the first site comprise one or more types of visitors who are checking-in/out at the facility during predetermined intervals for specific purposes, wherein the visitor types of the first site are child site visitor types, and the visitor types of the second site are parent site visitor types.

9. The method of claim 7, wherein the visitor data of the first site further comprises one or more parameters, including duration, purpose of visit, photo identity, and business unit of the facility.

10. The method of claim 7, wherein the one or more security protocols for each of the plurality of visitors associated with the first site comprises at least configuration of specific rules and guidelines to ensure safety of each of the plurality of visitors and regulatory compliance with security-policies of the facility.

11. The method of claim 7, wherein the method further comprises correlating the first visitor data associated with the first site with the second visitor data associated with the second site based on at least the visitor types and business unit of the second site.

12. The method of claim 7, wherein the method further comprises receiving the request to link the first visitor data associated with the first site and the second visitor data associated with the second site via a user interface from an authorized user of the second site.

13. The method of claim 7, wherein the method further comprises validating the correlated first visitor data associated with the first site periodically.

14. The method of claim 7, wherein the method further comprises executing the one or more security protocols for each of the plurality of visitors associated with the first site based on the correlated first visitor data.

15. A computer program product tangibly embodied on a non-transitory computer readable medium, the computer program product including instructions that, when executed by one or more processors, cause the one or more processors to perform operations comprising:
receiving first visitor data associated with a first site of a plurality of sites of a facility, wherein the first visitor data comprises at least visitor types of the first site that is associated with a plurality of visitors of the facility;
retrieving second site of the plurality of sites and second visitor data associated with a second site of the plurality of sites of the facility;
receiving a request to link the first visitor data associated with the first site and the second visitor data associated with the second site;
retrieving the second visitor data associated with the second site of the plurality of sites;
correlating the first visitor data with the second visitor data based on at least visitor types of the second site, wherein the first visitor data is correlated with the second visitor data by:
automatically modifying the visitor types of the first site to map with the visitor types of the second site based on at least the visitor types of the second site;
storing the correlated first visitor data associated with the first site in a cloud-based database to update the visitor types of the first site; and
establishing one or more security protocols for each of the plurality of visitors associated with the first site based on the correlated first visitor data.

## Amended claims

### Amended claims in accordance with Rule 137(2) EPC.

1. A system comprising:
one or more processors (104); and
one or more memory (106) including instructions executable by the one or more processors (104), wherein the one or more processors (104) is configured to:
receive first visitor data associated with a first site (202-1) of a plurality of sites (202) of a facility, wherein the first visitor data comprises at least visitor types of the first site that is associated with a plurality of visitors of the facility;
retrieve a second site (202-2) of the plurality of sites (202) and second visitor data associated with the second site of the plurality of sites of the facility;
receive a request to link the first visitor data associated with the first site (202-1) and the second visitor data associated with the second site (202-2);
retrieve the second visitor data associated with the second site of the plurality of sites (202);
correlate the first visitor data with the second visitor data based on at least visitor types of the second site, wherein the first visitor data is correlated with the second visitor data by:
automatically modifying the visitor types of the first site (202-1) to map with the visitor types of the second site (202-2) based on at least the visitor types of the second site;
store the correlated first visitor data associated with the first site (202-1) in a cloud-based database to update the visitor types of the first site; and
establish one or more security protocols for each of the plurality of visitors associated with the first site (202-1) based on the correlated first visitor data.

2. The system of claim 1, wherein the visitor types of the first site (202-1) comprise one or more types of visitors who are checking-in/out at the facility during predetermined intervals for specific purposes, wherein the visitor types of the first site are child site visitor types, and the visitor types of the second site (202-2) are parent site visitor types.

3. The system of claim 1, wherein the one or more processors (104) are configured to correlate the first visitor data associated with the first site (202-1) with the second visitor data associated with the second site (202-2) based on at least the visitor types and business unit of the second site.

4. The system of claim 1, wherein the one or more processors (104) are configured to receive the request to link the first visitor data associated with the first site (202-1) and the second visitor data associated with the second site (202-2) via a user interface (110) from an authorized user of the second site.

5. The system of claim 1, wherein the one or more processors (104) are further configured to validate the correlated first visitor data associated with the first site (202-1) periodically.

6. The system of claim 1, wherein the one or more processors (104) are further configured to execute the one or more security protocols for each of the plurality of visitors associated with the first site (202-1) based on the correlated first visitor data.

7. A method comprising:
receiving, by one or more processors (104), first visitor data associated with a first site (202-1) of a plurality of sites (202) of a facility, wherein the first visitor data comprises at least visitor types of the first site that is associated with a plurality of visitors of the facility;
retrieving, by the one or more processors (104), a second site (202-2) of the plurality of sites (202) and second visitor data associated with the second site of the plurality of sites of the facility;
receiving, by the one or more processors (104), a request to link the first visitor data associated with the first site (202-1) and the second visitor data associated with the second site (202-2);
retrieving, by the one or more processors (104), the second visitor data associated with the second site (202-2) of the plurality of sites;
correlating, by the one or more processors (104), the first visitor data with the second visitor data based on at least visitor types of the second site, wherein the first visitor data is correlated with the second visitor data by:
automatically modifying, by the one or more processors (104), the visitor types of the first site to map with the visitor types of the second site based on at least the visitor types of the second site;
storing, by the one or more processors (104), the correlated first visitor data associated with the first site (202-1) in a cloud-based database to update the visitor types of the first site; and
establishing, by the one or more processors (104), one or more security protocols for each of the plurality of visitors associated with the first site based on the correlated first visitor data.

8. The method of claim 7, wherein the visitor types of the first site (202-1) comprise one or more types of visitors who are checking-in/out at the facility during predetermined intervals for specific purposes, wherein the visitor types of the first site (202-1) are child site visitor types, and the visitor types of the second site (202-2) are parent site visitor types.

9. The method of claim 7, wherein the visitor data of the first site (202-1) further comprises one or more parameters, including duration, purpose of visit, photo identity, and business unit of the facility.

10. The method of claim 7, wherein the one or more security protocols for each of the plurality of visitors associated with the first site (202-1) comprises at least configuration of specific rules and guidelines to ensure safety of each of the plurality of visitors and regulatory compliance with security-policies of the facility.

11. The method of claim 7, wherein the method further comprises correlating the first visitor data associated with the first site (202-1) with the second visitor data associated with the second site (202-2) based on at least the visitor types and business unit of the second site.

12. The method of claim 7, wherein the method further comprises receiving the request to link the first visitor data associated with the first site (202-1) and the second visitor data associated with the second site (202-2) via a user interface (110) from an authorized user of the second site.

13. The method of claim 7, wherein the method further comprises validating the correlated first visitor data associated with the first site (202-1) periodically.

14. The method of claim 7, wherein the method further comprises executing the one or more security protocols for each of the plurality of visitors associated with the first site (202-1) based on the correlated first visitor data.

15. A computer program product tangibly embodied on a non-transitory computer readable medium, the computer program product including instructions that, when executed by one or more processors (104), cause the one or more processors (104) to perform operations comprising:
receiving first visitor data associated with a first site (202-1) of a plurality of sites (202) of a facility, wherein the first visitor data comprises at least visitor types of the first site that is associated with a plurality of visitors of the facility;
retrieving a second site (202-2) of the plurality of sites (202) and second visitor data associated with the second site of the plurality of sites of the facility;
receiving a request to link the first visitor data associated with the first site (202-1) and the second visitor data associated with the second site (202-2);
retrieving the second visitor data associated with the second site (202-2) of the plurality of sites (202);
correlating the first visitor data with the second visitor data based on at least visitor types of the second site (202-2), wherein the first visitor data is correlated with the second visitor data by:
automatically modifying the visitor types of the first site (202-1) to map with the visitor types of the second site (202-2) based on at least the visitor types of the second site;
storing the correlated first visitor data associated with the first site (202-1) in a cloud-based database to update the visitor types of the first site (202-1); and
establishing one or more security protocols for each of the plurality of visitors associated with the first site (202-1) based on the correlated first visitor data.
